# EUROPÄISCHE PATENTSCHRIFT

(11) **EP 2 884 185 B1**
(45) Veröffentlichungstag und Bekanntmachung des Hinweises auf die Patenterteilung: **25.10.2017**
(21) Anmeldenummer: 14004146.8
(22) Anmeldetag: 09.12.2014
(51) Int. Cl.: F24C 3/14, A47J 37/04, F24C 1/12

(54) **Terrassen-Heizstrahler**
Terrace heater
Radiateur de terrasse

(30) Priorität: 10.12.2013 DE 202013010952 U
(43) Veröffentlichungstag der Anmeldung: 17.06.2015
(73) Patentinhaber: C-Concepts Vertriebs GmbH, 56337 Simmern (DE)
(72) Erfinder: Weisbrod, Ralf, D-56337 Simmern (DE)
(74) Vertreter: Strauss, Peter

(56) Entgegenhaltungen:
- WO-A1-2013/140352
- WO-A2-03/093730
- DE-C- 42 759
- FR-A3- 2 811 534
- GB-A- 1 065 677
- US-A1- 2009 050 615

## Beschreibung

### Technisches Gebiet

Die Erfindung betrifft einen als Standgerät ausgebildeten Terrassen-Heizstrahler mit einem bis zur Standfläche reichenden, einen Hohlraum bildenden Unterteil zur Aufnahme einer Gasflasche, einem auf das Unterteil aufgesetzten Standrohr, an dessen oberem Ende ein Brenner angeordnet ist, wobei oberhalb des Brenners und im Abstand dazu ein tellerförmiger Reflektor vorgesehen ist.

Derartige Terrassen-Heizstrahler sorgen noch für angenehme Temperaturen im Außenbereich, insbesondere zu Beginn und zu Ende der sog, "warmen Jahreszeit", wenn die Witterung eigentlich noch nicht oder nicht mehr zum Verweilen im Freien einlädt. Im weiteren Umkreis eines Wärme abstrahlenden Terrassen-Heizstrahlers kann man dann selbst bei tieferen Temperaturen noch eine Zeitlang sitzen bleiben oder sich durch Annäherung an die Heizquelle bei Bedarf auch kurzzeitig wieder aufwärmen. Insoweit sind bekannte Terrassen-Heizstrahler beliebt und auch relativ weit verbreitet.

Zu einem gemütlichen oder geselligen Aufenthalt im Freien zählt nicht selten auch das Zubereiten, genauer gesagt, das Garen oder Grillen von Fleisch, Fisch, Geflügel, Grillwurst, Gemüse u. Ä. über offenem Feuer oder Glut. Dies geschieht mit Hilfe eigener Grillgeräte, welche von einer Person überwacht und auch meist ständig bedient werden müssen. Dies kann oft nur an entlegener Stelle erfolgen, abseits vom gesellschaftlichen oder geselligen Geschehen. Während also das Aufwärmen für alle gedacht ist und eine Gruppe zusammenhält, verlaufen sich sozusagen die Wege beim Grillen und bleiben davon die meisten Gäste ausgeschlossen. Heizstrahler und Grills dieser Art sind unter anderem aus der FR 2 811 534 A3, der GB 1 065 677 A, der US 2099/050615 A1, der WO 03/093730 A2 und der WO 2013/140352 A1 bekannt.

### Darstellung der Ereindung

Hier setzt die Erfindung an. Sie möchte einen bekannten Terrassen-Heizstrahler dahingehend weiterbilden, dass er - ohne Einbuße oder Beeinträchtigung seiner Heizfunktion - auch noch eine Grillfunktion übernehmen kann.

Gelöst werden kann diese Aufgabe auf überraschend einfache Weise mit den Merkmalen des Anspruchs 1 oder 8. Zweckmäßige Weiterbildungen geben die jeweils folgenden Ansprüche an.

Danach kann es bei dem grundsätzlichen Aufbau eines Terrassen-Heizstrahlers verbleiben. Lediglich der Reflektor braucht eine Zusatzfunktion zu übernehmen, wozu er nur geringfügig modifiziert zu werden braucht, nämlich im einfachsten Falle mit Durchlässen im Abstand zum Brenner versehen werden soll, worin nach unten gerichtete Einhängeösen mit ihrem Schaft drehbar angeordnet sind, die Grillgutträger enthalten. Diese erste Ausführungsform ist insbesondere für Grillgutträger in Form einer Gondel bestimmt, welche mit ihrem Boden abtropfendes Fett auffangen kann.

Bereits damit kann folgendes erreicht werden. Die Einhängeösen dienen einerseits dazu, Grillgutträger in eine wirksame und vorteilhafte Nähe zur Heizquelle zu bringen und andererseits das Grillgut zu drehen, damit es von allen Seiten mit Hitze beaufschlagt und gegart werden kann. Die Drehbewegung kann im einfachsten Falle von Hand erfolgen, wofür vor allem derjenige sorgen dürfte, welcher das Grillgut anschließend verzehren möchte.

Im Ergebnis wird nicht nur die ohnehin eingesetzte Heizenergie doppelt, nämlich gleichzeitig auch zum Grillen oder Garen genutzt. Es werden damit auch Gäste zusammengeführt und an einem Ereignis persönlich beteiligt, was dem Ereignis einen zusätzlichen Reiz verleiht.

Was nun die weitere Ausgestaltung des Erfindungsgedankens anbetrifft, so ist es vorteilhaft, wenn die Durchlässe unterschiedlichen Abstand von der Mittelachse des Standrohres aufweisen.

Zweckmäßigerweise sind mehrere Durchlässe auf einem konzentrischen Kreis um die Mittelachse des Standrohres angeordnet.

Bei einer Weiterbildung sind die Einhängeösen von einer oberhalb des Reflektors angeordneten oberen Tragkonstruktion drehbar gehalten.

Vorteilhaft sind die Schäfte der Einhängeösen in Buchsen geführt.

Nach einem weiteren Vorschlag sind die Einhängeösen am oberen Ende ihres Schaftes mit einem Ritzel versehen und die Ritzel sämtlicher Schäfte von einer Kette umschlungen, wobei ein Ritzel von einem Motor angetrieben ist.

Vorteilhaft ist im Bereich der Kette ein elastischer Kettenspanner vorgesehen.

Nach einem selbständigen Alternativvorschlag kann die hier anstehende Aufgabe mit einem gattungsgemäßen Terrassen-Heizstrahler auch derart gelöst werden, dass unterhalb des Brenners eine untere Tragkonstruktion angebracht ist, an deren Peripherie senkrecht gerichtete, bis in Nähe des Brenners reichende Spieße als Grillgutträger angeordnet sind.

Dabei ist es vorteilhaft, wenn die Spieße mit ihrer Spitze bis über den Reflektor reichen und in Durchlässen im Reflektor drehbar geführt sind.

Zweckmäßigerweise sind die Spieße an ihrem unteren Ende von einem Elektromotor angetrieben.

### Kurze Beschreibung der Zeichnung

Weitere Einzelheiten und Vorteile werden nachstehend i. V. mit der Zeichnung für zwei bevorzugte Ausführungsbeispiele beschrieben. Darin zeigen:
- Fig. 1: einen erfindungsgemäßen Terrassen-Heizstrahler für hängende Grillgutträger bei geöffnetem Reflektor in Seitenansicht,
- Fig. 2: einen Teilbereich der oberen Randzone des Terrassen-Heizstrahlers von Fig. 1 mit eingehängter Gondel für das Grillgut in vergrößerter Darstellung,
- Fig. 3: einen nach oben offenen Reflektor mit einer oberen Tragkonstruktion und Antrieb für die Einhängeösen in Draufsicht,
- Fig. 4: die obere Tragkonstruktion gemäß den Fig. 1 und 3 in Seitenansicht,
- Fig. 5: den Reflektor gemäß Fig. 1 in Unteransicht und
- Fig. 6: einen anderen Terrassen-Heizstrahler mit unterer Tragkonstruktion für stehende Grillgutträger in Form von Spießen in Seitenansicht.

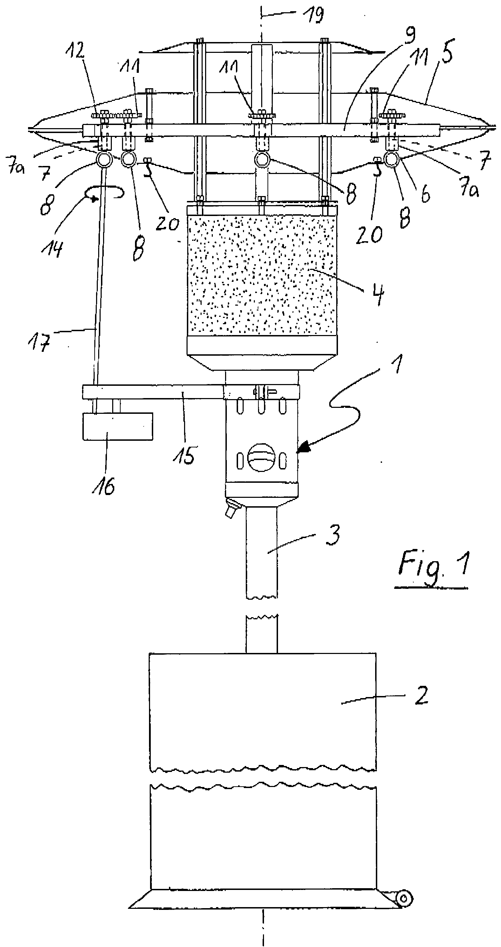

Nach Fig. 1 entspricht ein erfindungsgemäßer Terrassen-Heizstrahler 1 zunächst einem herkömmlichen Terrassen-Heizstrahler, indem er folgende Merkmale aufweist: Ein Unterteil 2 mit einem Hohlraum zur Aufnahme einer Gasflasche, ein anschließendes Standrohr 3 mit einem Brenner 4 am oberen Ende und darüber einen Reflektor 5, welcher die Form eines Tellers hat. Damit kann der Heizstrahler 1 seine bekannte Heizfunktion erfüllen.

Neu sind dagegen Modifikationen am Reflektor 5, nämlich Durchlässe 6 für die Schäfte 7 von nach unten gerichteten Einhängeösen 8. Die Einhängeösen 8 sind mit ihren Schäften 7 drehbar in den Durchlässen 6 angeordnet, wobei die Schäfte 7 in Buchsen 7a geführt sind und von einer oberen Tragkonstruktion 9 gehalten werden. Des Weiteren beinhalten die Einhängeösen 8 Grillgutträger 10.

Bei dieser Ausführungsform können die Grillgutträger 10 in Form einer Gondel o. Ä. eingehängt, gehalten und ohne weiteres von Hand gedreht werden, damit das eingesetzte Grillgut (hier nicht dargestellt) rundum zeitweilig der Wärme des Brenners 4 ausgesetzt ist und allmählich gart. Statt eines Handbetriebes ist mit wenig Aufwand auch ein Motorbetrieb möglich, wie nachfolgend noch gezeigt wird.

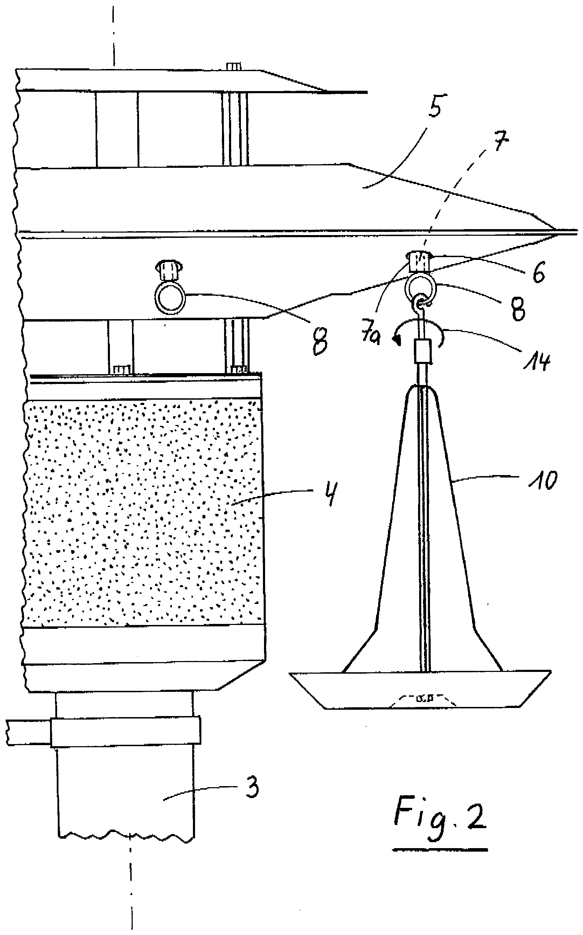

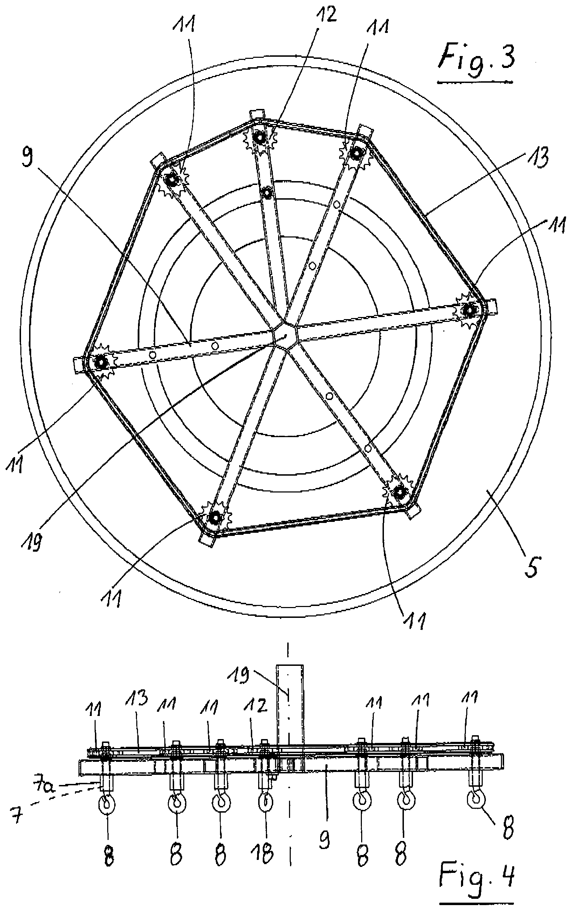

Die Fig. 2 lässt einen Teilbereich der oberen Randzone in betriebsbereiter Anordnung erkennen, bei der der Reflektor 5 geschlossen ist und nur noch die Einhängeösen 8 äußerlich hervortreten. Die inneren Zusammenhänge gehen aus den Fig. 1 sowie 3 und 4 hervor, woraus erkennbar ist, dass die Schäfte 7 der Einhängeösen 8 in der oberhalb des Reflektors 5 angeordneten oberen Tragkonstruktion 9 drehbar gehalten sind. Die Enden der Schäfte 7 stehen nach oben über und tragen jeweils Ritzel 11 und 12. Dabei umschlingt eine endlose Kette 13 sämtliche Ritzel 11, 12 und nimmt diese zwangsweise zu einer Drehbewegung in ein und derselben Drehrichtung mit, wie mit dem einfachen Drehpfeil 14 sowohl in Fig. 1 als auch 2 angedeutet ist.

Bei einem Handbetrieb kann dagegen bei jeder Einhängeöse 8 die Drehrichtung frei gewählt und auch ständig unabhängig von den anderen Einhängeösen 8 gewechselt werden. Für den Motorantrieb genügt es, dass ein einziges Ritzel (hier 12) angetrieben ist, was in Fig. 1 schematisch dargestellt ist. Dort ist unterhalb des Brenners 4 ein Ausleger 15 dargestellt, welcher einen Antriebsmotor 16 trägt, von dem eine Antriebswelle 17 mit einer Einhängeöse 8 samt Schaft 7 und Ritzel 12 drehfest verbunden ist.

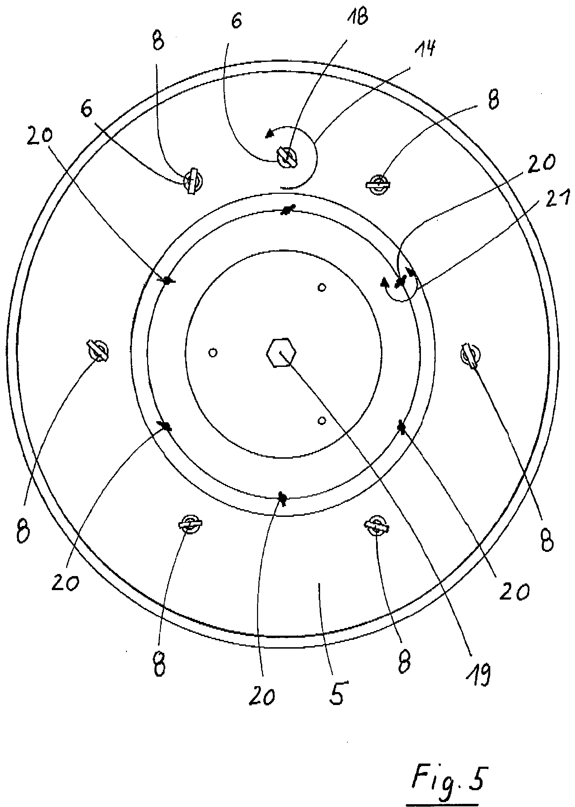

Gemäß Fig. 5, welche den Reflektor von Fig. 1 in Unteransicht zeigt, sind mehrere Einhängeösen 18 auf einem konzentrischen Kreis in Bezug auf die Mittelachse 19 anordnet, darunter auch die motorisch angetriebene Einhängeöse 18, welche hier an dem einfachen Drehpfeil 14 erkennbar ist. Auf einem kleineren konzentrischen Kreis sind zusätzlich weitere kleinere Einhängeösen 20 frei drehbar angeordnet (vgl. auch Fig. 19), erkennbar an dem Doppelpfeil 21.

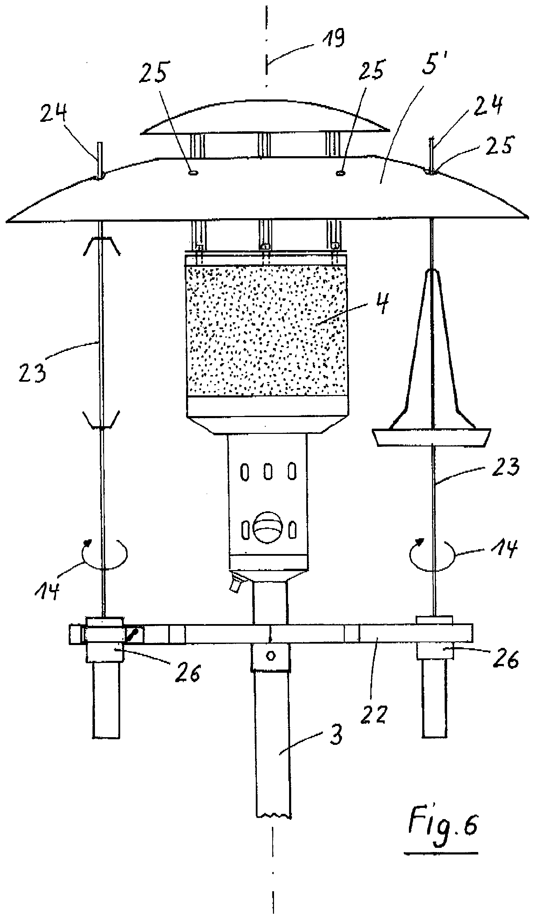

Fig. 6 schließlich gibt eine andere Bauform an mit einer unteren Tragkonstruktion 22, welche senkrecht aufgerichtete drehbare Spieße 23 trägt, wobei die Spieße 23 mit ihrer Spitze 24 bis über den Reflektor 5' reichen und in Durchlässen 25 geführt sind. Dabei können die Spieße 23 unmittelbar als Grillgutträger eingesetzt werden oder in Verbindung mit weiteren Haltemitteln, z. B. solchen ähnlich einer Gondel. Die untere Tragkonstruktion 22 ist hier strahlenförmig ausgebildet, wobei an ihren Extremitäten oder an ihrer Peripherie die Spieße 23 angeordnet sind, jeweils samt einem (hier batteriebetriebenen) Elektromotor 26 als individuellem Antrieb.

### Bezugszeichenliste

- 1: Terrassen-Heizstrahler
- 2: Unterteil
- 3: Standrohr
- 4: Brenner
- 5: Reflektor
- 5': Reflektor
- 6: Durchlass
- 7: Schaft
- 7a: Buchse
- 8: Einhängeöse
- 9: obere Tragkonstruktion
- 10: Grillgutträger, Gondel
- 11: Ritzel
- 12: Ritzel
- 13: Kette
- 14: Drehpfeil
- 15: Ausleger
- 16: Motor
- 17: Antriebswelle
- 18: Einhängeöse
- 19: Mittelachse
- 20: Einhängeöse (klein)
- 21: Doppelpfeil
- 22: untere Tragkonstruktion
- 23: Spieß
- 24: Spitze
- 25: Durchlass
- 26: Elektromotor

## Patentansprüche

1. Als Standgerät ausgebildeter Terrassen-Heizstrahler (1) mit einem bis zur Standfläche reichenden, einen Hohlraum bildenden Unterteil (2) zur Aufnahme einer Gasflasche, einem auf das Unterteil (2) aufgesetzten Standrohr (3), an dessen oberem Ende ein Brenner (4) angeordnet ist, wobei oberhalb des Brenners (4) und im Abstand dazu ein tellerförmiger Reflektor (5) vorgesehen ist, **dadurch gekennzeichnet, dass** der Reflektor (5) mit mehreren Durchlässen (6) im Abstand zum Brenner (4) versehen ist, in denen nach unten gerichtete Einhängeösen (8) mit Ihrem Schaft (7) drehbar angeordnet sind, welche Grillgutträger (19) enthalten.

2. Terrassen-Heizstrahler nach Anspruch 1, **dadurch gekennzeichnet, dass** die Durchlässe (6) unterschiedlichen Abstand von der Mittelachse (19) des Standrohres (3) aufweisen.

3. Terrassen-Heizstrahler nach Anspruch 1 oder 2, **dadurch gekennzeichnet, dass** mehrere Durchlässe (6) auf einem konzentrischen Kreis um die Mittelachse (19) des Standrohres (3) angeordnet sind.

4. Terrassen-Heizstrahler nach einem der Ansprüche 1 bis 3, **dadurch gekennzeichnet, dass** die Einhängeösen (8) von einer oberhalb des Reflektors (5) angeordneten oberen Tragkonstruktion (9) drehbar gehalten sind.

5. Terrassen-Heizstrahler nach einem der Ansprüche 1 bis 4, **dadurch gekennzeichnet, dass** die Schäfte (7) der Einhängeösen (8) in Buchsen (7a) geführt sind.

6. Terrassen-Heizstrahler nach einem der Ansprüche 1 bis 5, **dadurch gekennzeichnet, dass** die Einhängeösen (8) am oberen Ende ihres Schaftes (7) mit einem Ritzel (11, 12) versehen und die Ritzel (11.12) sämtlicher Schäfte (7) von einer Kette (13) umschlungen sind, wobei ein Ritzel (12) von einem Motor (16) angetrieben ist.

7. Terrassen-Heizstrahler nach Anspruch 6, **dadurch gekennzeichnet, dass** im Bereich der Kette (13) ein elastischer Kettenspanner vorgesehen ist.

8. Als Standgerät ausgebildeter Terrassen-Heizstrahler (1) mit einem bis zur Standfläche reichenden, einen Hohlraum bildenden Unterteil (2) zur Aufnahme einer Gasflasche, einem auf das Unterteil (2) aufgesetzten Standrohr (3), an dessen oberem Ende ein Brenner (4) angeordnet ist, wobei oberhalb des Brenners (4) und im Abstand dazu ein tellerförmiger Reflektor (5) vorgesehen ist, **dadurch gekennzeichnet, dass** unterhalb des Brenners (4) eine untere Tragkonstruktion (22) angebracht ist, an deren Peripherie senkrecht gerichtete, bis in Nähe des Brenners (4) reichende Spieße (23) als Grillgutträger angeordnet sind.

9. Terrassen-Heizstrahler nach Anspruch 8, **dadurch gekennzeichnet, dass** die Spieße (23) mit ihrer Spitze (24) bis über den Reflektor (5') reichen und in Durchlässen (25) im Reflektor (5') drehbar geführt sind.

10. Terrassen-Heizstrahler nach Anspruch 8 oder 9, **dadurch gekennzeichnet, dass** die Spieße (23) an ihrem unteren Ende von einem Elektromotor (26) angetrieben sind.

## Claims

1. Terrace heater (1) designed as a standing device having a lower part (2) extending as far as the floor space and forming a cavity to accommodate a gas bottle, a vertical pipe (3) placed on the lower part (2) and on the upper end of which is arranged a burner (4), wherein above the burner (4) and at a distance therefrom, a plate-like reflector (5) is provided, **characterised in that** the reflector (5) is provided with several passages (6) at a distance from the burner (4), in which downwardly directed suspension loops (8) with their shaft (7) are arranged to be rotatable, and which contain supports (19) for products to be grilled.

2. Terrace heater according to claim 1, **characterised in that** the passages (6) have a different distance from the central axis (19) of the vertical pipe (3).

3. Terrace heater according to claim 1 or 2, **characterised in that** several passages (6) are arranged on a concentric circle about the central axis (19) of the vertical pipe (3).

4. Terrace heater according to one of claims 1 to 3, **characterised in that** the suspension loops (8) are mounted to be rotatable by an upper supporting construction (9) arranged above the reflector (5).

5. Terrace heater according to one of claims 1 to 4, **characterised in that** the shafts (7) of the suspension loops (8) are guided in bushings (7a).

6. Terrace heater according to one of claims 1 to 5, **characterised in that** the suspension loops (8) are provided on the upper end of their shaft (7) with a pinion (11, 12) and the pinions (11, 12) of all shafts (7) have a chain (13) wound around them, wherein a pinion (12) is driven by a motor (16).

7. Terrace heater according to claim 6, **characterised in that** a resilient chain tension adjuster is provided in the region of the chain (13).

8. Terrace heater (1) designed as a standing device having a lower part (2) extending as far as the floor space and forming a cavity to accommodate a gas bottle, a vertical pipe (3) placed on the lower part (2) and on the upper end of which is arranged a burner (4), wherein above the burner (4) and at a distance therefrom, a plate-like reflector (5) is provided, **characterised in that** below the burner (4) is attached a lower supporting construction (22), on the periphery of which are arranged vertically directed spits (23) extending to the vicinity of the burner (4) as supports for products to be grilled.

9. Terrace heater according to claim 8, **characterised in that** the spits (23) extend with their tip (24) to above the reflector (5') and are guided to be rotatable in passages (25) in the reflector (5').

10. Terrace heater according to claim 8 or 9, **characterised in that** the spits (23) are driven at their lower end by an electromotor (26).

## Revendications

1. Dispositif de chauffage de terrasse par rayonnement (1) conçu comme un appareil sur pied, avec une pièce inférieure (2) descendant jusqu'à la surface de pose, formant un espace creux, pour loger une bouteille de gaz, un tube sur pied (3) posé sur la pièce inférieure (2), à l'extrémité supérieure duquel est disposé un brûleur (4), un réflecteur en forme d'assiette (5) étant prévu au-dessus du brûleur (4) et à distance de celui-ci, **caractérisé en ce que** le réflecteur (5) est muni de plusieurs passages (6) à distance du brûleur (4), dans lesquels sont disposés de manière pivotante des oeillets d'accrochage (8) dirigés vers le bas avec leur tige (7), lesquels coopèrent avec des supports de produit à griller (10).

2. Dispositif de chauffage de terrasse par rayonnement selon la revendication 1, **caractérisé en ce que** les passages (6) présentent un espace différent de l'axe central (19) du tube sur pied (3).

3. Dispositif de chauffage de terrasse par rayonnement selon la revendication 1 ou 2, **caractérisé en ce que** plusieurs passages (6) sont disposés sur un cercle concentrique autour de l'axe central (19) du tube sur pied (3).

4. Dispositif de chauffage de terrasse par rayonnement selon l'une des revendications 1 à 3, **caractérisé en ce que** les oeillets d'accrochage (8) sont maintenus de manière pivotante par une structure portante (9) supérieure disposée au-dessus du réflecteur (5).

5. Dispositif de chauffage de terrasse par rayonnement selon l'une des revendications 1 à 4, **caractérisé en ce que** les tiges (7) des oeillets d'accrochage (8) sont conduites dans des douilles (7a).

6. Dispositif de chauffage de terrasse par rayonnement selon l'une des revendications 1 à 5, **caractérisé en ce que** les oeillets d'accrochage (8) sont munis au niveau de l'extrémité supérieure de leur tige (7) d'un pignon (11, 12) et **en ce que** les pignons (11, 12) de toutes les tiges (7) sont entourés d'une chaine (13), un pignon (12) étant entrainé par un moteur (16).

7. Dispositif de chauffage de terrasse par rayonnement selon la revendication 6, **caractérisé en ce qu'**il est prévu dans la zone de la chaine (13) un tendeur de chaine élastique.

8. Dispositif de chauffage de terrasse par rayonnement (1) conçu comme un appareil sur pied, avec une pièce inférieure (2) descendant jusqu'à la surface de pose, formant un espace creux, pour loger une bouteille de gaz, un tube sur pied (3) posé sur la pièce inférieure (2), à l'extrémité supérieure duquel est disposé un brûleur (4), un réflecteur en forme d'assiette (5) étant prévu au-dessus du brûleur (4) et à distance de celui-ci, **caractérisé en ce qu'**en dessous du brûleur (4), une structure portante (22) inférieure est mise en place, à la périphérie de laquelle sont disposés des piques (23) en tant que supports de produit à griller, dirigées verticalement, situées au voisinage du brûleur (4).

9. Dispositif de chauffage de terrasse par rayonnement selon la revendication 8, **caractérisé en ce que** les piques (23) par leur pointe (24) dépassent du réflecteur (5') et sont guidées de manière pivotante dans des passages (25) dans le réflecteur (5').

10. Dispositif de chauffage de terrasse par rayonnement selon la revendication 8 ou 9, **caractérisé en ce que** les piques (23) sont entrainées par un moteur électrique (26) au niveau de leur extrémité inférieure.
